# EUROPÄISCHE PATENTSCHRIFT

(11) **EP 3 430 271 B1**
(45) Veröffentlichungstag und Bekanntmachung des Hinweises auf die Patenterteilung: **25.02.2026**
(21) Anmeldenummer: 17710913.9
(22) Anmeldetag: 15.03.2017
(51) Int. Cl.: F04D 29/42, F04D 1/00, F04D 29/16, F16J 15/16

(54) **KREISELPUMPE MIT EINER ANORDNUNG ZUR REDUZIERUNG EINER RÜCKSTRÖMUNG**
CENTRIFUGAL PUMP WITH A SEALING DEVICE BETWEEN PRESSURE AND SUCTION SIDE
POMPE CENTRIFUGE AVEC UN DISPOSITIF D'ÉTANCHÉITÉ ENTRE LA ZONE DE REFOULEMENT ET L'ASPIRATION

(30) Priorität: 16.03.2016 DE 102016003180
(43) Veröffentlichungstag der Anmeldung: 23.01.2019
(73) Patentinhaber: KSB SE & Co. KGaA, 67227 Frankenthal (DE)
(72) Erfinder: PICKEL, Thomas, 67227 Frankenthal (DE)
(86) Internationale Anmeldenummer: PCT/EP2017/056091
(87) Internationale Veröffentlichungsnummer: WO 2017/158003

(56) Entgegenhaltungen:
- DE-A1- 19 646 527
- FR-A- 786 795
- GB-A- 268 197
- GB-A- 643 307
- US-A- 2 021 346
- US-A1- 2011 064 566
- US-A1- 2015 108 721
- US-B1- 6 234 748

## Beschreibung

Die Erfindung betrifft eine Kreiselpumpe mit einer Anordnung zur Reduzierung einer Rückströmung von einem Druckraum in einen Saugraum, wobei an einer Deckscheibe eines Laufrads ein rotierendes Element angeordnet ist, das mit einem nicht rotierenden Element zusammenwirkt, das an einem Gehäuseteil angeordnet ist.

Mithilfe einer solchen Anordnung soll ein Rückstrom von geförderter Flüssigkeit aus dem Druckbereich der Kreiselpumpe in deren Saugbereich auf ein Mindestmaß begrenzt werden. Im Stand der Technik werden dazu häufig Spaltdichtungen eingesetzt. Der zwischen den Oberflächen der beiden Dichtungsparameter verbleibende Spalt ist dabei so bemessen, dass ein vertretbarer Kompromiss zwischen Wirtschaftlichkeit und Betriebssicherheit der Kreiselpumpe gewährleistet wird. Hierbei ist zu berücksichtigen, dass die minimal erreichbare Spaltweite von verschiedenen Einflüssen abhängig ist. So können zum Beispiel Wellendurchbiegungen und Schwingungen dafür verantwortlich sein, dass nur ein relativ weiter Spalt mit entsprechend hohen Leckverlusten zu verwirklichen ist.

Bei verschmutzter Flüssigkeit muss überdies mit einer durch die abrasive Wirkung der Schmutzteile verursachten Spalterweiterung gerechnet werden. Es ist also vor allem bei Schmutzwasserkreiselpumpen mit einem ansteigenden Wirkungsgradverlust zu rechnen.

Um einen stetigen Verschleiß der Spaltdichtung an Kreiselpumpen zur Förderung abrasiver Fluide Rechnung zu tragen, wurde bereits vorgeschlagen, eine Nachstellmöglichkeit des Spaltes über einstellbare Dichtungselemente vorzusehen. Die DE 35 13 116 A1 beschreibt eine derartige Spaltdichtung. Eine solche von Hand einstellbare Spaltdichtung ist vergleichsweise aufwändig bei der Herstellung und erfordert viel Erfahrung von dem bedienenden Fachpersonal. Für das Einstellen, die Kontrolle und das zeitige Nachstellen der Dichtungselemente ist ein verhältnismäßig hoher Arbeitsaufwand erforderlich.

Die DE 195 19 322 A1 beschreibt eine zwischen der Gehäusewand und der Deckscheibe des Laufrads einer Kreiselpumpe angeordnete Dichtung. Die Dichtungsparameter Gehäusewand und Deckscheibe sind mit im Wesentlichen ringförmigen Oberflächen ausgestattet. Mindestens einer der beiden Dichtungsparameter ist als Bürste ausgebildet. Die als Bürste ausgebildete Oberfläche liegt auf einer glatten Gegenfläche des anderen Dichtungspartners auf.

Die GB 268 197 A beschreibt eine Zentrifugalpumpe, bei der das Laufrad in allen Teilen seiner Kammer ein beträchtliches radiales Spiel aufweist. Dementsprechend ist eine sich selbst einstellende oder sich selbst zentrierende Dichtungsvorrichtung vorgesehen, die einen ersten Ring und einen zweiten Ring umfasst. Der erste Ring liegt dicht an einer zylindrischen Fläche an der Laufradnabe an und der zweite Ring sitzt in einer Aussparung oder Vertiefung in der Seitenwand der Laufradkammer.

Die US 2 021 346 A offenbart eine Vorrichtung mit Dichtwirkung zwischen zwei relativ zueinander beweglichen Teilen in einer Zentrifugalpumpe, wobei ein Dichtring aus Gummi vorgesehen ist, der bei einer Ausführungsform mittels einer Vielzahl von Federelementen in Kontakt mit dem Laufrad gehalten wird.

Aus der FR 786.795 ist eine Vorrichtung zur Reduzierung von inneren Leckagen und Verschleiß an Kreiselpumpen und Turbinen, durch die schlammartige Flüssigkeiten strömen, bekannt.

Aus der US 6234748 B1 ist eine Verschleißringanordnung für eine Pumpe bekannt, bei der die Verschleißringanordnung einen inneren Verschleißring mit einer äußeren Nut und eine innere Ausnehmung in dem Laufrad zur Aufnahme des inneren Verschleißrings umfasst. Die Ausnehmung weist eine innere Nut zur axialen Ausrichtung mit der äußeren Nut auf. Die Verschleißringanordnung umfasst ferner mindestens einen im Wesentlichen bogenförmigen Halter zum gleichzeitigen Eingreifen in die innere Nut und die äußere Nut, um den inneren Verschleißring relativ zu dem Laufrad zu halten, sowie einen äußeren Verschleißring, der mit dem inneren Verschleißring zusammenwirkt und im Allgemeinen koaxial in Bezug auf den inneren Verschleißring ausgerichtet ist.

Die US 2011/0064566 A1 beschreibt eine Vorrichtung zur Laufradabdichtung bei Kreiselpumpen, wobei in dem Pumpengehäuse zwischen der Druckseite und der Saugseite des Laufrads ein aus einem starren Druckring sowie einem mit dem Druckring verbundenen elastischen Teil bestehender Dichtring angeordnet ist, dessen elastischer Teil im Bereich des Laufradeintritts über den gesamten Umfang an einer Gleitfläche der axialen oder radialen Umfangskontur des Laufrads gleitend anliegt und der Dichtring in dem Pumpengehäuse so positioniert ist, dass sein elastischer Teil gegen die Gleitfläche vorgespannt ist und hierdurch dichtend gegen die Gleitfläche gedrückt wird.

Die GB 643 307 A offenbart eine Kreiselpumpe, bei der das Fluid zur Mitte des Laufrads durch ein rohrförmiges Element strömt, das mittels einer koaxial zu dem rohrförmigen Element angeordneten Schraubenfeder einer Endbelastung ausgesetzt ist, die dazu neigt, die effektive Länge des Elements in einer axialen Richtung zu vergrößern, so dass eine der Endflächen des Elements ohne Spiel an einer rotierenden Fläche anliegt, um eine Dichtung zu bilden.

Aufgabe der Erfindung ist es, eine Kreiselpumpe anzugeben, welche die Rückströmung von einem Druckraum in einen Saugraum weiter reduziert. Dabei soll eine Anordnung zur Anwendung kommen, die keiner Einstellung von Hand bedarf. Die Kreiselpumpe soll sich durch eine zuverlässige Betriebsweise und einen möglichst hohen Wirkungsgrad auszeichnen. Weiterhin soll die Kreiselpumpe leicht zu bedienen sein, auch durch nicht speziell geschultes Fachpersonal. Weiterhin soll sich die Kreiselpumpe durch eine hohe Lebensdauer und eine vielfältige Einsatzmöglichkeit auszeichnen.

Diese Aufgabe wird erfindungsgemäß durch eine Kreiselpumpe mit den Merkmalen des Anspruchs 1 gelöst. Bevorzugte Varianten sind den Unteransprüchen, der Beschreibung und den Zeichnungen zu entnehmen.

Erfindungsgemäß weist die Kreiselpumpe eine Anordnung auf, bei der ein rotierendes Element, welches an der Deckscheibe eines geschlossenen Laufrades angeordnet ist, mit einem nicht rotierenden Element zusammenwirkt, das verschieblich gelagert ist und von einem Krafterzeugungselement gegen das rotierende Element gepresst wird, wobei sich ein Fluidfilm zwischen dem rotierenden und nichtrotierenden Element ausbilden kann.

Erfindungsgemäß weist die Kreiselpumpe ein geschlossenes Radiallaufrad mit einer Deckscheibe auf, an der das rotierende Element angeordnet ist. Im Gegensatz zu herkömmlichen Spaltdichtungen wird bei der erfindungsgemäßen Konstruktion das nicht rotierende Element verschieblich gelagert. Ein Krafterzeugungselement wirkt einen Druck auf das nicht rotierende Element aus und drückt dieses, vorzugsweise in axialer Richtung, auf das rotierende Element.

Die dabei entstehende Reibung wird dadurch minimiert, dass das rotierende Element und/oder das nicht rotierende Element aus einem keramischen Werkstoff ausgebildet sind. Vorzugsweise kommt dabei ein siliziumcarbidhaltiger Werkstoff zum Einsatz, wobei sich insbesondere gesintertes Siliziumcarbid (SSiC) eignet. Bei dieser Konstruktion entsteht ein minimaler Spalt zwischen den beiden planen Keramikflächen. Eine Schmierung erfolgt durch das Fördermedium.

Das rotierende Element und/oder das nicht rotierende Element sind vorzugsweise ringartig ausgebildet bzw. weisen ringförmig ausgebildete Bereiche auf. Die beiden Keramikringe werden durch ein Krafterzeugungselement gegeneinander gedrückt, sodass das Gehäuseteil gegenüber dem rotierenden Laufrad gegen eine Rückströmung abgedichtet wird.

Das Krafterzeugungselement ist erfindungsgemäß als elastisches Element in Form einer Feder, ausgebildet. Die Feder kann beispielsweise als Wellfeder ausgebildet sein. Auch können Tellerfedern bzw. Druckfedern zum Einsatz kommen.

Die Krafterzeugungselemente sind dabei vorzugsweise an oder in einem Gehäuseteil angeordnet. Das Krafterzeugungselement stützt sich am feststehenden Gehäuseteil ab und drückt auf das verschieblich gelagerte nicht rotierende Element. Das nicht rotierende Element wird in axialer Richtung gegen das rotierende Element bewegt.

Dabei erweist es sich als vorteilhaft, wenn das nicht rotierende Element geführt wird. Dabei kann das Gehäuseteil eine Fläche zur Führung des axial verschieblichen nicht rotierenden Elementes aufweisen. Die Fläche des Gehäuseteils bietet einen Anschlag gegen eine radiale Verschiebung.

Bei einer Variante der Erfindung weist das Gehäuseteil eine ringförmige Nut auf, in welcher das Krafterzeugungselement und/oder das axial verschiebliche nicht rotierende Element angeordnet ist.

Vorzugsweise ist zwischen dem nicht rotierenden Element und dem Gehäuseteil mindestens ein Dichtungselement angeordnet. Dabei kann es sich beispielsweise um O-Ringe handeln. Die O-Ringe werden dabei so ausgewählt, dass eine zuverlässige Abdichtung gewährleistet wird, aber dennoch eine axiale Verschiebung ermöglicht wird.

Bei einer Variante der Erfindung weist die Kreiselpumpe zusätzlich zu der Anordnung eine Einrichtung zur radialen Führung auf. Diese Einrichtung dient der radialen Führung des Laufrades und verhindert ein Anstreifen des Laufrades am Gehäuseteil. Diese Führungseinrichtung weist ein rotierendes Bauteil und ein nicht rotierendes Bauteil auf. Be dem rotierenden Bauteil kann es sich beispielsweise um einen Laufring handeln und bei dem nicht rotierenden Bauteil um einen Spaltring, der am Gehäuseteil angeordnet ist.

Der Laufring ist vorzugsweise an der Deckscheibe des Laufrades angeordnet. Ist die Führungseinrichtung zusätzlich zu der Anordnung zur Reduzierung der Rückströmung vorgesehen, so erweist es sich als günstig, wenn der Laufring an einer radialen Außenseite der Deckscheibe angeordnet ist und mit dem entsprechenden radial dazu angeordneten Spaltring zusammenwirkt. Das rotierende Element der Anordnung zur Reduzierung der Rückströmung ist bei dieser Variante vorzugsweise an der Stirnseite der Deckscheibe des geschlossenen Radiallaufrades angeordnet und wirkt dabei in axialer Richtung mit dem nicht rotierenden Element zusammen, das am Gehäuseteil angeordnet ist.

Erfindungsgemäß weist das rotierende Element einen Abschnitt auf, der zur radialen Führung dient. Somit ist gemäß der Erfindung nicht zusätzlich zu dem rotierenden Element ein Laufring erforderlich, sondern der Laufring der radialen Führungseinrichtung wird von dem rotierenden Element der Anordnung zur Reduzierung der Rückströmung gebildet. Erfindungsgemäß ist das rotierende Element ringförmig mit einem L-förmigen Schnittprofil ausgebildet. Bei dem topfartig ausgebildeten rotierenden Element dient die radiale Außenfläche als Führung, die mit einem Spaltring zusammenwirkt, der vorzugsweise ebenfalls aus einem keramischen Werkstoff, insbesondere einem gesinterten Siliziumcarbid, ausgebildet ist. Die axiale Stirnseite wirkt erfindungsgemäß mit dem nicht rotierenden Element zusammen, das gegen diese axiale Stirnseite gepresst wird.

Ergänzend kann auch das nicht rotierende Element der Anordnung einen Abschnitt zur radialen Führung aufweisen. Dadurch kann das nicht rotierende Element die Aufgabe des Spaltrings übernehmen. Somit ist bei dieser Variante der Erfindung kein zusätzlicher Spaltring mehr erforderlich, sondern diese Aufgabe wird von dem nicht rotierenden Element übernommen. Dabei erweist es sich als vorteilhaft, wenn das nicht rotierende Element ringförmig mit einem L-förmigen Profil ausgebildet ist. Das topfartig ausgebildete nicht rotierende Element ist axial verschieblich gelagert und weist eine axiale Stirnfläche auf, die gegen eine axiale Gegenfläche des rotierenden Elements gepresst wird. Weiterhin weist das nicht rotierende Element eine radiale Innenfläche auf, die als radiale Führung dient. Die radiale Innenfläche wirkt vorzugsweise mit einer radialen Außenfläche des rotierenden Elements zusammen und verhindert auf diese Weise eine Verschiebung in radialer Richtung. Bei dieser Variante der Erfindung übernimmt die Anordnung zur Reduzierung der Rückströmung somit gleichzeitig die Aufgabe einer Radialführung. Eine zusätzliche Einrichtung zur radialen Führung mit einem Laufring und einem Spaltring ist somit nicht mehr erforderlich.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Schnittdarstellung einer Kreiselpumpe,
- Figur 2: eine Ausschnittsvergrößerung einer nicht erfindungsgemäßen Anordnung und einer zusätzlichen Einrichtung zur Radialführung,
- Figur 3: eine erfindungsgemäße Anordnung, bei der das rotierende Element die Aufgabe eines Laufrings übernimmt,
- Figur 4: eine nicht erfindungsgemäße Anordnung, bei der das nicht rotierende Element die Aufgabe eines Spaltrings übernimmt,

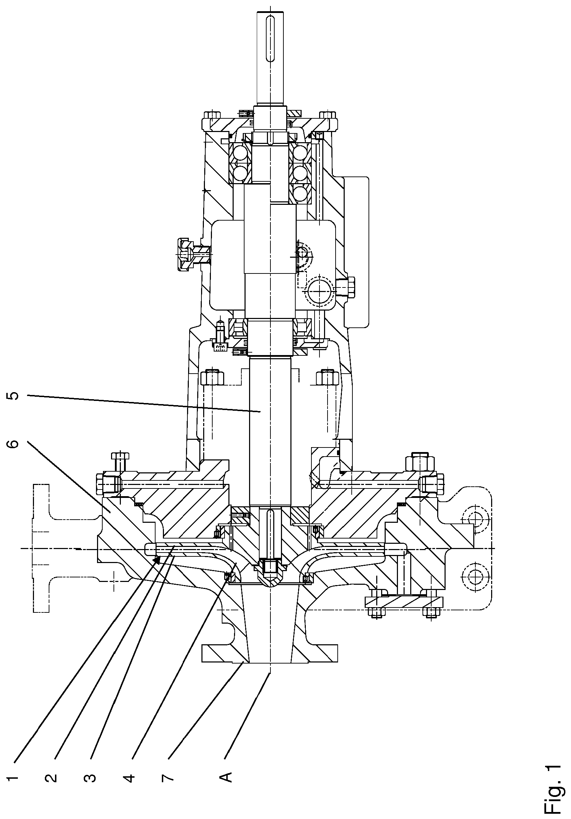

Figur 1 zeigt eine Kreiselpumpe mit einem Laufrad 1. Das Laufrad 1 ist als geschlossenes Radiallaufrad ausgebildet und weist eine Tragscheibe 2 sowie eine Deckscheibe 3 auf. Auf der Tragscheibe sind Schaufeln 4 angeordnet. Zwischen der Tragscheibe 2 und der Deckscheibe 3 werden Passagen zum Fördern des Mediums gebildet.

Das Laufrad 1 wird von einer Welle 5 um die Mittellängsachse A drehend angetrieben.

Das Laufrad 1 ist von einem Gehäuseteil 6 umgeben. Das Gehäuseteil 6 bildet einen Saugmund 7, der einstückig mit dem Gehäuseteil 6 ausgebildet ist.

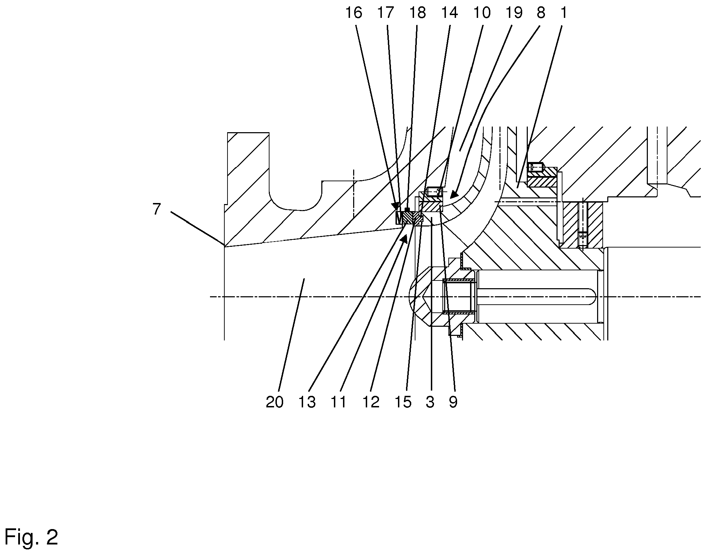

Figur 2, die nicht Teil der Erfindung ist, zeigt eine Ausschnittsvergrößerung im Bereich des Saugmunds 7 gemäß einer ersten Variante. Die Kreiselpumpe weist eine als Spaltdichtung ausgebildete Einrichtung 8 zur radialen Führung auf. Die Einrichtung 8 zur radialen Führung umfasst ein rotierendes Bauteil 9, das als Laufring ausgebildet ist und ein nicht rotierendes Bauteil 10, das als Spaltring ausgebildet ist. Das rotierende Bauteil 9 ist an einer radialen Außenseite der Deckscheibe 3 des Laufrades 1 angeordnet. Das rotierende Bauteil 9 rotiert somit mit dem Laufrad 1. Das nicht rotierende Bauteil 10 ist am Gehäuseteil 6 angeordnet und weist eine radiale Ringinnenseite als Führung auf, die mit der radialen Ringaußenseite des rotierenden Bauteils 9 zusammenwirkt und zusammen die Spaltdichtung bilden.

Bei der Ausführung gemäß der Darstellung in Figur 2 ist zusätzlich zu der Einrichtung 8 eine Anordnung 11 vorgesehen, die ein rotierendes Element 12 und ein nicht rotierendes Element 13 umfasst. Das rotierende Element 12 ist als Ring ausgebildet, der an der axialen Stirnseite der Deckscheibe 3 angeordnet ist. Dazu weist das rotierende Element 12 einen sich in axialer Richtung erstreckenden Vorsprung 14 auf, der in eine Nut 15 in der Deckscheibe 3 eingreift. Das nicht rotierende Element 13 ist als axial verschieblicher Ring ausgebildet, der von einer Fläche 16 des Gehäuseteils 6 gegen eine radiale Verschiebung geführt wird. Ein Krafterzeugungselement 17 übt eine Kraft auf das nicht rotierende Element 13 aus und drückt das nicht rotierende Element 13 gegen das rotierende Element 12. Das Krafterzeugungselement 17 ist als Feder ausgebildet. Im Ausführungsbeispiel kommt dabei eine Wellfeder zum Einsatz. Das nicht rotierende Element 13 wird von einem Dichtungselement 18 zu dem Gehäuseteil 6 abgedichtet. Bei dem Dichtungselement 18 handelt es sich vorzugsweise um einen O-Ring.

Das rotierende Element 12 und das nicht rotierende Element 13 sind im Ausführungsbeispiel aus gesintertem Siliziumcarbid (SSiC) ausgeführt. Die beiden axial zueinander gerichteten Stirnflächen des rotierenden Elements 12 und des nicht rotierenden Elements 13 werden von dem Krafterzeugungselement 17 aufeinander gedrückt. Es entsteht dabei ein minimaler Spalt. Die Reibung wird durch die keramischen Werkstoffe minimiert. Es bildet sich ein Schmierfilm aus Fördermedium in dem Spalt zwischen den sich berührenden Flächen des rotierenden Elements 12 und des nicht rotierenden Elements 13 aus.

Die Anordnung 11 verhindert gemeinsam mit der Einrichtung 8 eine Rückströmung aus einem Druckraum 19 der Pumpe in einen Saugraum 20 der Pumpe.

Bei der Variante gemäß Figur 2 ist somit ergänzend zu der Einrichtung 8 eine Anordnung 11 vorgesehen. Durch die Anordnung 11 wird aufgrund der aufeinander gepressten keramischen Flächen die Rückströmung minimiert und somit der Wirkungsgrad der Pumpe gesteigert.

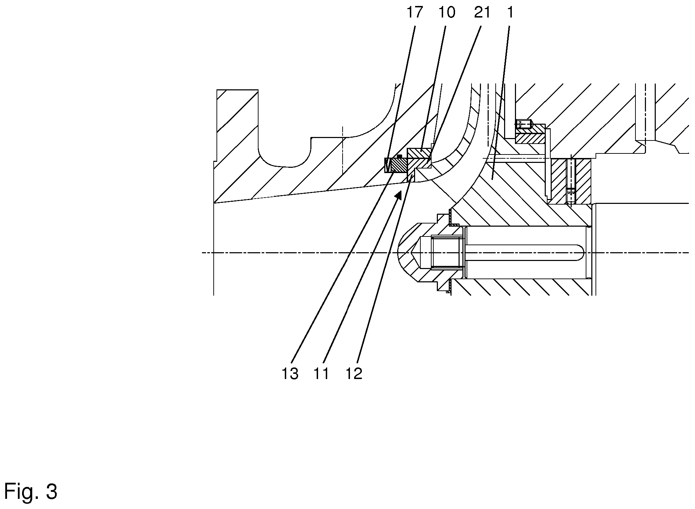

Figur 3 zeigt eine erfindungsgemäße Ausführungsform, bei der das am Laufrad angeordnete rotierende Element 12 einen Abschnitt 21 zur radialen Führung aufweist. Das rotierende Element 12 ist abgewinkelt ausgeführt. Dabei ist das rotierende Element 12 als Ring mit einem L-förmigen Profil ausgebildet. Der Abschnitt 21 ist ein Schenkel dieses Profils. Der Abschnitt 21 weist eine radiale Außenfläche auf, die mit einer radialen Innenfläche des nicht rotierenden Bauteils 10 zusammenwirkt. Das nicht rotierende Bauteil 10 ist als keramischer Spaltring ausgebildet. Vorzugsweise besteht das nicht rotierende Bauteil 10 aus gesintertem Siliziumcarbid (SSiC). Weiterhin weist das rotierende Element 12 eine axiale Stirnseite auf. Gegen die axiale Stirnseite des rotierenden Elements 12 wird die axiale Stirnseite des nicht rotierenden Elements 13 mit dem Krafterzeugungselement 17 gepresst.

Bei der in Figur 3 dargestellten Ausführungsform der Erfindung wird der Laufring der Einrichtung zur radialen Führung von dem rotierenden Element 12 der Anordnung 11 gebildet. Somit kommt diese Variante mit weniger Bauteilen aus.

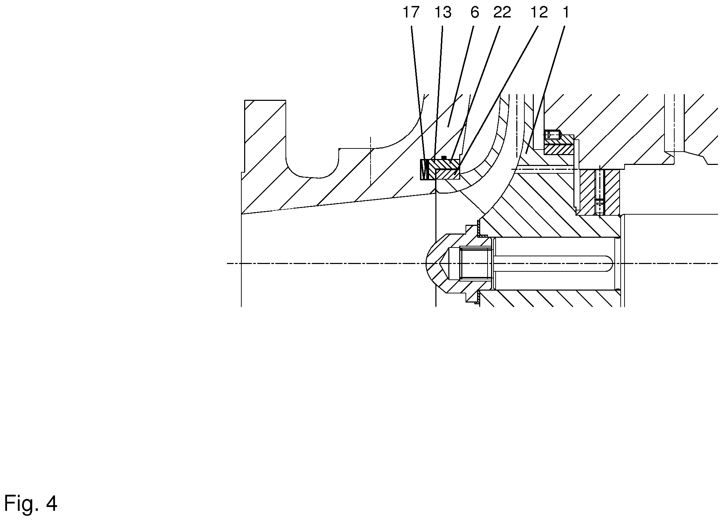

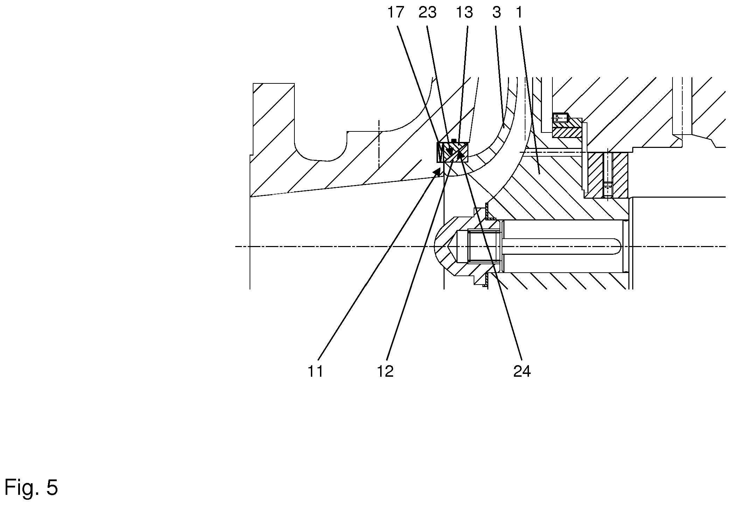

Bei der in Figur 4 dargestellten Variante, die nicht Teil der Erfindung ist, weist das nicht rotierende Element 13 einen Abschnitt 22 zur radialen Führung auf. Das nicht rotierende Element 13 ist abgewinkelt ausgebildet. Es handelt sich um einen Ring mit einem L-förmigen Schnittprofil. Der als Schenkel dieses Profils ausgebildete Abschnitt 22 dient der radialen Führung. Der Abschnitt 22 weist eine radiale Innenfläche auf, die mit der radialen Außenfläche des am Laufrad 1 angeordneten rotierenden Elements 12 zusammenwirkt. Zwischen beiden Flächen wird ein Spalt gebildet. Der Abschnitt 22 gewährleistet eine Führung in radialer Richtung. Das nicht rotierende Element 13 ist axial verschieblich in einer Nut des Gehäuseteils 6 gelagert und wird von dem Krafterzeugungselement 17 in axialer Richtung gegen das rotierende Element 12 gepresst. Dadurch werden eine axiale Fläche des nicht rotierenden Elements 13 und eine axiale Fläche des rotierenden Elements 12 gegeneinander gepresst.

In der in Figur 4 dargestellten Variante übernimmt somit das nicht rotierende Element 13 die Aufgabe eines Spaltrings. Diese Variante kommt mit noch weniger Bauteilen aus. Bei der in Figur 4 dargestellten Variante übernimmt die Anordnung die Aufgabe der Einrichtung zur radialen Führung. Somit werden bei der Variante gemäß Figur 4 ein in radialer Richtung verlaufender Spalt und ein in axialer Richtung verlaufender Spalt gebildet, wobei der in radialer Richtung verlaufender Spalt durch das Zusammenpressen zweier Flächen minimal ist und mit Fördermedium geschmiert wird. Zudem wird eine radiale Führung gewährleistet.

Falls die Baugrößen es zulassen oder erforderlich machen, können gleichzeitig sowohl das in der Fig. 3 gezeigte rotierende Element 12 als auch das in der Fig. 4 gezeigte nicht rotierende Element 13 vorgesehen sein.

## Patentansprüche

1. Kreiselpumpe mit einer Anordnung (11) zur Reduzierung einer Rückströmung von einem Druckraum (19) in einen Saugraum (20), wobei an einer Deckscheibe (3) eines Laufrads (1) ein rotierendes Element (12) angeordnet ist, das mit einem an einem Gehäuseteil (6) angeordneten nicht rotierenden Element (13) zusammenwirkt, wobei das nicht rotierende Element (13) verschieblich angeordnet ist, wobei das nicht rotierende Element (13) von einem Krafterzeugungselement (17) gegen das rotierende Element (12) wirkt, wobei das rotierende Element (12) und/oder das nicht rotierende Element (13) aus einem keramischen Werkstoff bestehen, wobei das rotierende Element (12) ein L-förmiges Profil aufweist und das Krafterzeugungselement (17) als elastisches Element in Form einer Feder, insbesondere Wellfeder, ausgebildet ist.

2. Kreiselpumpe nach Anspruch 1, **dadurch gekennzeichnet, dass** das rotierende Element (12) und/oder das nicht rotierende Element (13) aus einem siliziumcarbidhaltigen Werkstoff bestehen.

3. Kreiselpumpe nach Anspruch 1 oder 2, **dadurch gekennzeichnet, dass** das nicht rotierende Element (13) axial verschieblich angeordnet ist.

4. Kreiselpumpe nach einem der Ansprüche 1 bis 3, **dadurch gekennzeichnet, dass** das nicht rotierende Element (13) geführt wird, wobei vorzugsweise das Gehäuseteil (6) eine Fläche (16) zur Führung in eine axiale Richtung aufweist.

5. Kreiselpumpe nach einem der Ansprüche 1 bis 4, **dadurch gekennzeichnet, dass** zwischen dem nicht rotierenden Element (13) und dem Gehäuseteil (6) ein Dichtungselement (18) angeordnet ist.

6. Kreiselpumpe nach einem der Ansprüche 1 bis 5, **dadurch gekennzeichnet, dass** die Kreiselpumpe eine Einrichtung (8) zur radialen Führung aufweist mit einem rotierenden Bauteil (21) und einem nicht rotierenden Bauteil (10).

7. Kreiselpumpe nach einem der Ansprüche 1 bis 6, **dadurch gekennzeichnet, dass** das rotierende Element (12) einen Abschnitt (21) zur radialen Führung aufweist.

8. Kreiselpumpe nach einem der Ansprüche 1 bis 7, **dadurch gekennzeichnet, dass** das nicht rotierende Element (13) mit einem L-förmigen Profil, ausgebildet ist.

9. Kreiselpumpe nach einem der Ansprüche 1 bis 8, **dadurch gekennzeichnet, dass** das rotierende Element (12) und/oder das nicht rotierende Element (13) ringartig ausgebildet sind.

## Claims

1. Centrifugal pump comprising an arrangement (11) for reducing a backflow from a pressure chamber (19) into a suction chamber (20), wherein on a cover plate (3) of an impeller (1) is disposed a rotating element (12), which cooperates with a non-rotating element (13) disposed on a casing part (6), wherein the non-rotating element (13) is arranged displaceably, wherein a force-generating element (17) causes the non-rotating element (13) to act against the rotating element (12), wherein the rotating element (12) and/or the non-rotating element (13) consist of a ceramic material, wherein the rotating element (12) has an L-shaped profile and the force-generating element (17) is configured as an elastic element in the form of a spring, in particular a corrugated spring.

2. Centrifugal pump according to Claim 1, **characterized in that** the rotating element (12) and/or the non-rotating element (13) consist of a silicon-carbide-containing material.

3. Centrifugal pump according to Claim 1 or 2, **characterized in that** the non-rotating element (13) is arranged axially displaceably.

4. Centrifugal pump according to one of Claims 1 to 3, **characterized in that** the non-rotating element (13) is guided, wherein the casing part (6) preferably has a face (16) for the guidance in an axial direction.

5. Centrifugal pump according to one of Claims 1 to 4, **characterized in that** between the non-rotating element (13) and the casing part (6) is arranged a sealing element (18).

6. Centrifugal pump according to one of Claims 1 to 5, **characterized in that** the centrifugal pump has a device (8) for the radial guidance, comprising a rotating component (21) and a non-rotating component (10).

7. Centrifugal pump according to one of Claims 1 to 6, **characterized in that** the rotating element (12) has a portion (21) for the radial guidance.

8. Centrifugal pump according to one of Claims 1 to 7, **characterized in that** the non-rotating element (13) is configured with an L-shaped profile.

9. Centrifugal pump according to one of Claims 1 to 8, **characterized in that** the rotating element (12) and/or the non-rotating element (13) are of ring-like configuration.

## Revendications

1. Pompe centrifuge avec un ensemble (11) de réduction d'un reflux depuis une chambre de pression (19) dans une chambre d'aspiration (20), un élément rotatif (12), qui coopère avec un élément non rotatif (13) disposé sur une partie (6) de boîtier, étant disposé sur un disque de recouvrement (3) d'une roue à aubes (1), l'élément non rotatif (13) étant disposé de manière à pouvoir coulisser, l'élément non rotatif (13) agissant contre l'élément rotatif (12) par un élément de production de force (17), l'élément rotatif (12) et/ou l'élément non rotatif (13) étant constitués d'un matériau en céramique, l'élément rotatif (12) comportant un profil en forme de L et l'élément de production de force (17) étant formé comme un élément élastique sous la forme d'un ressort, en particulier d'un ressort ondulé.

2. Pompe centrifuge selon la revendication 1, **caractérisée en ce que** l'élément rotatif (12) et/ou l'élément non rotatif (13) sont constitués d'un matériau contenant du carbure de silicium.

3. Pompe centrifuge selon la revendication 1 ou 2, **caractérisée en ce que** l'élément non rotatif (13) est disposé de manière à pouvoir coulisser axialement.

4. Pompe centrifuge selon l'une des revendications 1 à 3, **caractérisée en ce que** l'élément non rotatif (13) est guidé, la partie (6) de boîtier comportant de préférence une surface (16) pour le guidage dans une direction axiale.

5. Pompe centrifuge selon l'une des revendications 1 à 4, **caractérisée en ce qu'**un élément d'étanchéité (18) est disposé entre l'élément non rotatif (13) et la partie (6) de boîtier.

6. Pompe centrifuge selon l'une des revendications 1 à 5, **caractérisée en ce que** la pompe centrifuge comporte un dispositif (8) pour le guidage radial avec un composant rotatif (21) et un composant non rotatif (10).

7. Pompe centrifuge selon l'une des revendications 1 à 6, **caractérisée en ce que** l'élément rotatif (12) comporte une section (21) pour le guidage radial.

8. Pompe centrifuge selon l'une des revendications 1 à 7, **caractérisée en ce que** l'élément non rotatif (13) est formé avec un profil en forme de L.

9. Pompe centrifuge selon l'une des revendications 1 à 8, **caractérisée en ce que** l'élément rotatif (12) et/ou l'élément non rotatif (13) sont de forme annulaire.
